# EUROPEAN PATENT APPLICATION

(11) **EP 2 071 006 A1**
(43) Date of publication of application: **17.06.2009**
(21) Application number: 07254679.9
(22) Date of filing: 03.12.2007
(51) Int. Cl.: C10L 1/02, C10L 1/14, C10L 10/02, C10L 10/12, C10L 1/18, C10L 1/23

(54) **Use, method and composition**

(71) Applicant: BP OIL INTERNATIONAL LIMITED, Sunbury-on-Thames TW16 7BP (GB)
(72) Inventor: Allan, Robert Edward, Pangbourne, Reading, RG8 7QR (GB); Schonborn, Alessandro, London, WC1 E6BT (GB)
(74) Representative: Perkins, Nicholas David

(57) **Abstract**

The use of at least one cetane improver and at least one fatty acid mono-alkyl ester in which the fatty acid has less than 16 carbon atoms, to reduce the emissions of both particulate matter having a particle size of up to 32 nm and nitrogen oxides, on combustion of a fuel composition in a compression ignition engine; a method of reducing the emissions of both particulate matter having a particle size of up to 32 nm and nitrogen oxides on combustion in a compression ignition engine of a fuel composition comprising at least one fatty acid mono-alkyl ester by providing sufficient of at least one cetane improver in the fuel composition to provide a pre-determined cetane value for the fuel composition and providing that at least 5 percent by volume of the fatty acid mono-alkyl esters in the fuel composition are mono-alkyl esters of fatty acids in which the fatty acids have less than 16 carbon atoms; and a fuel composition comprising at least one fatty acid mono-alkyl ester and at least one cetane improver in which that at least 5 percent by volume of the fatty acid mono-alkyl esters in the fuel composition are mono-alkyl esters of fatty acids in which the fatty acids have less than 16 carbon atoms.

## Description

This invention relates to a use of fuel components to reduce emissions, to a method of reducing emissions and to a fuel composition having reduced emissions on combustion. Fuel compositions comprising fatty acid mono-alkyl esters are known. Knothe, G. in Fuel Processing Technology 86 (2005) 1059-1070 reports the dependence of biofuel properties on the structure of fatty acid alkyl esters. Cetane numbers of fatty esters are also reported by Knothe et al in Fuel 82 (2003) 971-975. Knothe et al in SAE Tech Paper 971681 describe the influence of potential cetane improvers on fatty compounds. Results using esters of fatty acids with 18 carbon atoms are disclosed, but no mention is made of any effect on emissions.

McCormick R. L. et al in Environmental Science & Technology vol. 35, No. 9, 2001 describe the use of fatty acid mono-alkyl esters in a heavy-duty engine. According to this publication a direct comparison of the impact of fatty acid chain length on emissions was performed using a series of saturated methyl esters based of lauric acid (12 carbon atoms in the fatty acid), palmitic acid (16 carbon atoms in the fatty acid) and stearic acid (18 carbon atoms in the fatty acid). According to this publication, compared to petroleum diesel, the nitrogen oxide (sometimes called NOₓ) emissions increased with increasing density or iodine number, or decreasing cetane number, whereas particle mass (also sometimes called PM) emissions remained unchanged. The authors of this publication state that "... *we conclude that shorter chain esters produce higher NOₓ emissions, but note that the fully saturated methyl laurate still produced NOₓ at or below the certification fuel level. Therefore, shortening of the hydrocarbon chain may be a route to NOₓ neutral fuels with improved properties. Chain length has no significant impact on PM emissions for this small dataset."*

The authors of this publication speculate on several reasons for the observed differences in NOₓ emissions but conclude that *"The important conclusion of this work is that fuel chemistry is at the root of all of these fuel properties and the increased NOₓ emissions observed for many biodiesel fuels. The most fundamental way to alter the emissions performance of a fuel is to alter molecular structure*".

McCormick R L et al in SAE Paper 2002-01-1658 2002 describe fuel additive and blending approaches to reducing NOₓ emissions from biodiesel. This paper states that *"Blending of 20 % biodiesel with petroleum diesel is well known to cause a significant reduction in PM emissions but can also cause NOₓ emissions to increase by 1 to 3 percent*". In the experiments reported in this paper, 20% biodiesels (B20) derived using soy-based biodiesel and yellow grease based biodiesel were used. According to the authors " *Both soy-based biodiesel and yellow grease based biodiesel showed a significant NOₓ increase relative to cert fuel, as well as the PM decrease typical of these fuels*". The authors sought to address the increased NOₓ emissions by blending with FT diesel, lowering the aromatic content of the base fuel or by the use of certain cetane improvers. In one of their conclusions, the authors state : *"The cetane enhancers di-tert-butyl peroxide and 2-ethyl-hexyl nitrate are both effective at reducing NOₓ from B20 blends in this engine, while retaining the PM emission benefits of biodiesel*". The authors of this paper did not seek to study the effect of fatty acid chain length on emissions.

Graboski, M. S. et al in "The Effect of Biodiesel Composition on Engine Emissions from a DDC Series 60 Diesel Engine - Final Report No. 2 in a series of 6", NREL, February 2003 reported testing to determine the effect of biodiesel source material and ester molecular structure (number of double bonds and chain length) on particulate matter (PM), nitrogen oxides (NOₓ) and certain unregulated pollutants. Testing included a series of fuels consisting of nearly pure fatty acid esters with different chain lengths and numbers of double bonds, as well as a number of fuels from practical feedstocks. The authors conclusions included *"Regression analysis of the results indicated that emissions could be correlated by one parameter. PM reduction was proportional to oxygen content for biodiesels with cetane number of greater than about 45 (density greater than 0.89). For fuels with cetane number less than 45, PM reduction was less. NOₓ emissions were also well correlated with a single parameter, either density or cetane number (which were highly correlated with each other). The results suggest that neat biodiesel with cetane numbers greater than about 68 may produce NOₓ emissions equal to or less than certification fuel. The impact of molecular structure is implicit in either the density or cetane number... Data collected also demonstrate the effect of chain length. The density of shorter chain length saturated esters is greater than longer chain saturated esters and the NOₓ emission is greater. Note that methyl laurate (12 carbon fatty acid chain), with cetane number 61.2 and density 0.873, is NOₓ neutral compared to certification fuel. The important conclusion is that fuel chemistry is at the root [of] the fuel properties that effect emissions, and in particular the increased NOₓ emissions observed for many biodiesel fuels*".

Thus, there remains a need for a fuel composition which overcomes or at least mitigates, these problems. It has now been found that when comparing the emissions on combustion in a compression ignition engine of fuel compositions comprising fatty acid mono-alkyl esters, if the comparison is undertaken at an ignition delay which is the same for all the fuel compositions, the emissions of small particulate matter and of nitrogen oxides both decrease with decreasing number of carbon atoms in the fatty acids of the fatty acid mono-alkyl esters. The ignition delays of fuel compositions may be adjusted by the use of at least one cetane improver.

Thus, according to the present invention, there is provided the use of at least one cetane improver and at least one fatty acid mono-alkyl ester in which the fatty acid has less than 16 carbon atoms, to reduce the emissions of both particulate matter having a particle size of up to 32 nm and nitrogen oxides, on combustion of a fuel composition in a compression ignition engine.

According to another aspect of the present invention, there is provided a method of reducing the emissions of both particulate matter having a particle size of up to 32 nm and nitrogen oxides on combustion in a compression ignition engine of a fuel composition comprising at least one fatty acid mono-alkyl ester which method comprises providing sufficient of at least one cetane improver in the fuel composition to provide a pre-determined cetane value for the fuel composition and providing that at least 5 percent by volume of the fatty acid mono-alkyl esters in the fuel composition are mono-alkyl esters of fatty acids in which the fatty acids have less than 16 carbon atoms.

According to another aspect of the present invention there is provided a fuel composition comprising at least one fatty acid mono-alkyl ester characterised in that the fuel composition comprises at least one cetane improver and in that at least 5 percent by volume of the fatty acid mono-alkyl esters in the fuel composition are mono-alkyl esters of fatty acids in which the fatty acids have less than 16 carbon atoms.

It has now been found that when comparing the emissions on combustion in a compression ignition engine of fuel compositions comprising fatty acid mono-alkyl esters, if the comparison is undertaken at an ignition delay (or cetane value) which is the same for all the fuel compositions, the emissions of particulate matter having a particle size of up to 32 nm and of nitrogen oxides both decrease with decreasing number of carbon atoms in the fatty acids of the fatty acid mono-alkyl esters. The ignition delays (or cetane values) of fuel compositions may be adjusted by the use of at least one cetane improver.

This is a different trend to that observed by McCormick R. L. et al in Environmental Science & Technology vol. 35, No. 9,2001, where it was reported that "*For fully saturated fatty acid chains the NOₓ emissions increase with decreasing chain lengths for tests using 18, 16 and 12 carbon chain molecules".* The observation by McCormick et al was arrived at by comparison of the emissions from the combustion of the fuels and without the use of cetane improvers to maintain a predetermined cetane value for the fuels compared.

Thus, the present invention solves the technical problem identified above by the use of at least one cetane improver and at least one fatty acid mono-alkyl ester in which the fatty acid has less than 16 carbon atoms. This may enable the cetane value of the fuel composition to be adjusted, for example to a predetermined value, and thereby provide a reduction of the emissions of both particulate matter having a particle size of up to 32 nm and nitrogen oxides on combustion of the fuel composition in a compression ignition engine, for example, by comparison with the emissions from fuel compositions having the same cetane value and comprising fatty acid mono-alkyl esters; none of which have fatty acids with less than 16 carbon atoms or in which less than 5 percent by volume of the fatty acid mono-alkyl esters in the fuel composition are mono-alkyl esters of fatty acids in which the fatty acids have less than 16 carbon atoms.

In the method of the present invention the reduction in the emissions of both particulate matter having a particle size of up to 32 nm and nitrogen oxides on combustion in a compression ignition engine of a fuel composition comprising at least one fatty acid mono-alkyl ester is achieved by providing sufficient of at least one cetane improver in the fuel composition to provide a pre-determined cetane value for the fuel and providing that at least 5 percent by volume of the fatty acid mono-alkyl esters in the fuel composition are mono-alkyl esters of fatty acids in which the fatty acids have less than 16 carbon atoms. The reduction of the emissions of both particulate matter having a particle size of up to 32 nm and nitrogen oxides on combustion of the fuel composition in a compression ignition engine may be for example, by comparison with the emissions from fuel compositions having the same cetane value and comprising fatty acid mono-alkyl esters, none of which have fatty acids with less than 16 carbon atoms or in which less than 5 percent by volume of the fatty acid mono-alkyl esters in the fuel composition are mono-alkyl esters of fatty acids in which the fatty acids have less than 16 carbon atoms.

The fuel composition of the present invention which comprises at least one fatty acid mono-alkyl ester, and at least one cetane improver and in which at least 5 percent by volume of the fatty acid mono-alkyl esters in the fuel composition are mono-alkyl esters of fatty acids in which the fatty acids have less than 16 carbon atoms can provide reduced emissions of both particulate matter having a particle size of up to 32 nm and nitrogen oxides on combustion in a compression ignition engine, when compared to fuel compositions having the same cetane value and comprising fatty acid mono-alkyl esters none of which have fatty acids with less than 16 carbon atoms or in which less than 5 percent by volume of the fatty acid mono-alkyl esters in the fuel composition are mono- alkyl esters of fatty acids in which the fatty acids have less than 16 carbon atoms.

Suitable mono-alkyl esters of the present invention include methyl esters, ethyl esters, butyl esters and glycerol esters. Preferably, the alkyl esters are methyl esters and/or ethyl esters, more preferably methyl esters. Suitable fatty acid mono-alkyl esters in which the fatty acids have less than 16 carbon atoms may be esters in which the fatty acid has 15, 14, 13, 12, 11, 10, 9 or 8 carbon atoms, preferably 14, 12, 10 or 8 carbon atoms. The fatty acids having less than 16 carbon atoms may be saturated or unsaturated fatty acids. Unsaturated fatty acids may have one, two or three double bonds. Preferred fatty acid mono-alkyl esters in which the fatty acids have less than 16 carbon atoms include methyl laurate and methyl myristate in which the fatty acids have 12 and 14 carbon atoms respectively. Another suitable mono-alkyl fatty acid ester in which the fatty acid has less than 16 carbon atoms is methyl myristoleate. Preferred mono-alkyl fatty acid esters in which the fatty acids have less than 16 carbon atoms may comprise alkyl esters derived from coconut oil, especially methyl esters derived from coconut oil.

Suitable fatty acid mono-alkyl esters in which the fatty acids have at least 16 carbon atoms, include esters in which the fatty acids have 16, 18, 20 or 22 carbon atoms. The fatty acids having at least 16 carbon atoms may be saturated or unsaturated. Unsaturated fatty acids having at least 16 carbon atoms may have one, two or three double bonds. Suitable fatty acid mono-alkyl esters in which the fatty acids have at least 16 carbon atoms include methyl palmitate, methyl palmitoleate, methyl stearate, methyl oleate, methyl linoleate. Preferred fatty acid mono-alkyl esters in which the fatty acids have at least 16 carbon atoms include methyl palmitate and methyl stearate in which the fatty acids have 16 and 18 carbon atoms respectively.

In the composition of the present invention, preferably at least 20 percent, more preferably from 20 to 95 percent and yet more preferably from 40 to 90 percent by volume of the fatty acid mono-alkyl esters in the fuel composition are mono-alkyl esters of fatty acids in which the fatty acids have less than 16 carbon atoms.

The method of the present invention, preferably comprises providing that at least 20 percent, more preferably from 20 to 95 percent and yet more preferably from 40 to 90 percent by volume of the fatty acid mono-alkyl esters in the fuel composition are mono- alkyl esters of fatty acids in which the fatty acids have less than 16 carbon atoms.

The use of the present invention, suitably comprises providing that at least 5 percent by volume, preferably at least 20 percent, more preferably from 20 to 95 percent and yet more preferably from 40 to 90 percent by volume of the fatty acid mono-alkyl esters in the fuel composition are mono-alkyl esters of fatty acids in which the fatty acids have less than 16 carbon atoms.

The fatty acid mono-alkyl esters may be made by methods known in the art, for example by the transesterification of triglycerides. The triglycerides may be obtained from rapeseed oil, which is sometime called canola oil, from soy oil, used cooking oil, palm oil, coconut oil, fish oil, including salmon oil, jatropha oil, castor oil, linseed oil, olive oil, peanut oil, sunflower oil, babussa oil, milk thistle oil and/or animal fat, including tallow.

The requisite percentage of fatty acid mono-alkyl esters in which the fatty acids have less than 16 carbon atoms may be obtained by selection of a suitable source of triglyceride for the manufacture of the esters. For example, coconut oil has a high concentration of triglycerides of fatty acids in which the fatty acids have less than 16 carbon atoms and is thus a suitable source of triglycerides for the manufacture of fatty acid mono-alkyl esters for the present invention. Genetic modification and/or selective breeding may be used to provide suitable sources of triglycerides having suitable concentrations of triglycerides of fatty acids in which the fatty acids have less than 16 carbon atoms. Mixing methods and/or separation methods, including distillation, may be applied to mixtures of triglycerides to provide triglycerides with suitable concentrations of triglycerides of fatty acids in which the fatty acids have less than 16 carbon atoms for use in the preparation of esters for the present invention. Mixing methods and/or separation methods, including distillation, may be applied to mixtures of mono-alkyl fatty acid esters to provide mono-alkyl esters with suitable concentrations of fatty acid mono-alkyl esters in which the fatty acids have less than 16 carbon atoms.

In the present invention, the total concentration of fatty acid mono-alkyl esters in the fuel composition is preferably at least 1 % by volume. The total concentration of fatty acid mono-alkyl esters in the fuel composition may be up to and including 100 % by volume. Suitably, the total amount of fatty acid mono-alkyl esters in the fuel composition is up to a maximum of 5 % by volume (such fuel compositions are sometimes designated B5). The total amount of fatty acid mono-alkyl esters in the fuel composition may be up to a maximum of 7 % by volume (such fuel compositions are sometimes designated B7). The total amount of fatty acid mono-alkyl esters in the fuel composition may be up to a maximum of 10 % by volume (such fuel compositions are sometimes designated B10). The total amount of fatty acid mono-alkyl esters in the fuel composition may be up to a maximum of 30 % by volume (such fuel compositions are sometimes designated B30). The total amount of fatty acid mono-alkyl esters in the fuel composition may be up to a maximum of 50 % by volume (such fuel compositions are sometimes designated B50). The total amount of fatty acid mono-alkyl esters in the fuel composition may be up to a maximum of 100 % by volume (such fuel compositions are sometimes designated B100).

In the present invention, the fuel composition may additionally comprise middle distillate fuel oil derived from mineral sources. The fuel composition may additionally comprise hydrocarbons derived from Fischer-Tropsch processes, including processes deriving hydrocarbons from gas, biomass and/or coal. The fuel composition may additionally comprise hydrocarbons derived from hydrogenation of vegetable oils.

In the present invention, a suitable cetane improver is a nitrate or peroxide. Typical cetane improvers include di-tertiary butyl peroxide and 2-ethyl hexyl nitrate.

In the present invention, the total concentration of cetane improvers in the fuel composition is preferably in the range from greater than 0 to 1 % by volume, preferably from 100 ppm by volume to 2500 ppm by volume.

The cetane improver may be used in the present invention to providing sufficient of at least one cetane improver in the fuel composition to provide a pre-determined cetane value for the fuel composition. The pre-determined cetane value for the fuel composition may be a cetane number, for example as measured by any one of the methods ASTM D613, BS5580 or ISO5165. The pre-determined cetane value may be a cetane performance, for example corresponding to a pre-determined ignition delay. Such a pre-determined value may be expressed as corresponding to that of a reference fuel composition. Thus, the method of the present invention may comprise providing sufficient of at least one cetane improver in the fuel composition to provide a pre-determined cetane number for the fuel composition of from 40 to 90, preferably of from 45 to 65.

In the present invention, the fuel composition of the present invention preferably has a cetane number of from 40 to 90, preferably of from 45 to 65.

Cetane number may be measured by any one of the methods ASTM D613, BS5580 or ISO5165. Cetane may be measured by CFR engine or IQT (ignition quality tester). If the cetane number of the fuel falls outside the calibration range of the instrument, blends may be used.

The fuel composition may additionally comprise one or more fuel additives. Suitable fuel additives include detergents, antioxidants, friction modifiers, anti-wear additives, cold flow improvers, antifoams, demulsifiers and combustion modifiers.

The compression ignition engine of the present invention may be a diesel engine or a diesel hybrid engine or a diesel based, homogeneous charge compression ignition engine. The compression ignition engine may have no aftertreatment device or may have an aftertreatment device. Such after treatment devices may comprise a catalytic converter and/or a particular trap.

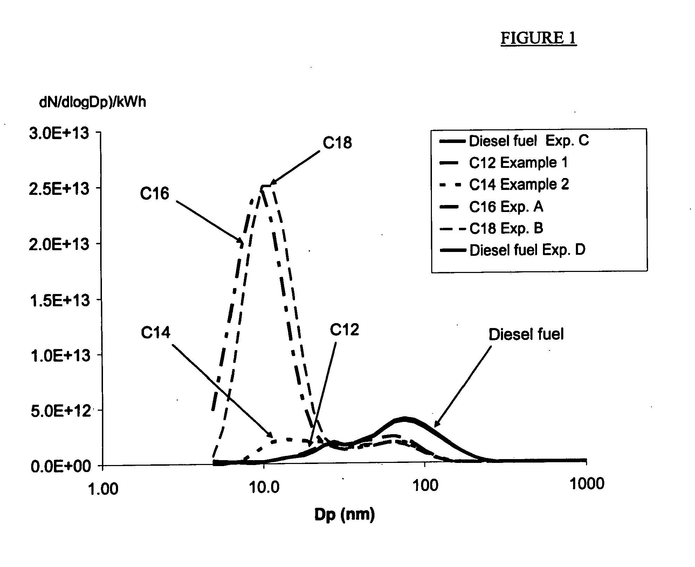

The invention will now be described by reference to the following examples and experiments and with reference to Figure 1 which is a graph of the particulate emission on combustion in a compression ignition engine of various fuel compositions.

The experiments were carried out in a single-cylinder direct-injection research Diesel engine based on the Ricardo Hydra design. The engine was constructed using the cylinder head, piston and fuel injector of a production 2.0L Ford Puma automotive Diesel engine to provide a combustion chamber geometry representative of a production Diesel engine. The compression ratio was 15:1. The intake air was naturally aspirated into the cylinder. The crank angle was monitored using an optical shaft encoder driven directly by the engine crankshaft with 1800 pulses per revolution. The cylinder pressure was sampled at intervals of 0.2 degrees crank angle using a Kistler 6056AU38 piezoelectric pressure transducer and a Kistler Type 5011 charge amplifier. The concentration of gaseous exhaust emissions was measured using a Signal gas analyzing system (chemiluminescence for NOₓ, NDIR for CO and CO₂, and FID for unburned hydrocarbons), while particulate size distribution and number were measured using a Cambustion DMS500 particulate mobility spectrometer. The engine crankshaft was coupled to a DC dynamometer whose control system allowed motoring and braking of the engine and thus constant speed operation at all engine loads. A fuel delivery system was used which allowed small quantities of fuel to be injected with controlled fuel temperature an injection pressure through the engine's commercial solenoid injector. This used a common-rail diesel fuel system operating with mineral based diesel fuel to generate the injection pressure without the mineral based diesel fuel taking part in the combustion. A stainless steel hydraulic cylinder with a centrally located free-piston was used to control the pressure of a low volume fuel delivery system containing the fuel sample. The remainder of the fuel system was similar to a conventional diesel engine and comprised a high-pressure diesel fuel pump, the common rail, a fuel cooler, a fuel tank and a fuel flow meter. All experiments were performed at 1200 rpm engine speed, with a constant indicated work output per cycle corresponding to 0.4 MPa IMEP. The injection pressure used in all experiments was 45 MPa.

In order to harmonize the ignition delay (and hence the cetane values) for the fuel compositions being tested, 2-ethyl hexyl nitrate cetane improver was added in small concentrations. The literature value for the cetane number of the methyl stearate is 86.9. The cetane numbers of the fuel compositions were adjusted to a pre-determined value (that of methyl stearate) by observing the combustion output from the engine. By adding different amounts of 2-ethyl hexyl nitrate cetane improver to the fuel compositions and operating the engine with the fuels, the operator was able to match the time that the fuel was injected and the time that the fuel ignited for each of the compositions. In this way, the fuel compositions were assessed with the same cetane value and ignition delay.

The amount of cetane improver for each of the fuel compositions esters used is shown in Table 1. The fatty acids of the esters were saturated and were of greater than 97 vol. % purity. In Examples 1 and 2 the fatty acids had less than 16 carbon atoms. Experiments A and B are not according to the present invention, because the fatty acids of the esters had at least 16 carbon atoms. Experiments C and D are not according to the present invention because they did not contain fatty acid mono-alkyl ester, but used a mineral derived diesel fuel meeting the EN590 standard.

**TABLE 1**

| Example/ Experiment | Fuel composition | Number of carbon atoms in fatty acid | Amount of cetane improver (vol. %) |
|---|---|---|---|
| 1 | methyllaurate | 12 | 1 |
| 2 | methyl myristate | 14 | 0.45 |
| A | methyl palmitate | 16 | 0.1 |
| B | methyl stearate | 18 | 0 |
| C | Mineral based diesel fuel | - | - |
| D | Mineral based diesel fuel | - | - |

The emissions are shown in Table 2.

**TABLE 2**

| Example/ Experiment | Number of carbon atoms in fatty acid | NOₓ emissions (g/kWh) | Particulate emissions cumulative number from 4.87 nm to 31.6 nm per kWh |
|---|---|---|---|
| 1 | 12 | 8.1107 | 5.36E+11 |
| 2 | 14 | 8.1908 | 1.13E+12 |
| A | 16 | 8.3468 | 9.78E+12 |
| B | 18 | 8.4868 | 9.59E+12 |
| C | - | 8.0702 | 5.22E+11 |
| D | - | 8.2245 | 5.04E+11 |

The particle size distribution of emissions is also shown in graph form in Figure 1. This is a graph of particle size against (dN/dlogDp)/kWh which is the number of particles in a certain size group (e.g. 5-10nm) divided by the logarithm of the difference in particle diameter between each boundaries of the size group (for the size group from 5-10nm this would be the log of: 10-5nm=5nm as an example). The particle number is specific to power [kWh] if the quantity of exhaust gas volume at specified conditions is known (this is done at 0° C and 1013 mbar).

The results in Table 2 show that the emissions of NOₓ decrease with decreasing carbon number of the fatty acids in the fatty acid mono-alkyl esters. Thus the NOₓ emissions are significantly less for the combustion in a compression ignition engine of ester fuel compositions in which greater than 5 % by volume, which in this case is substantially all (that is, greater than 97 % by volume, which was the purity of the fatty acid mono-alkyl esters), of the fatty acid mono-alkyl esters are esters in which the fatty acid has less than 16 carbon atoms than those from the combustion in the compression ignition engine of the ester fuel compositions in which none of the fatty acid mono-alkyl esters are esters in which the fatty acid has less than 16 carbon atoms, that is in which substantially all (that is, greater than 97 % by volume, which was the purity of the fatty acid mono-alkyl esters) of the fatty acid monoalkyl esters are esters in which the fatty acids have at least 16 carbon atoms.

Table 2 shows the NOₓ emissions in g/kWh and the cumulative number particulate emissions having particles sizes from 4.87 nm to 31.6 nm per kWh for the fuel compositions tested. The results in Table 2 and in Figure 1 show that the emissions of particulate matter having a particle size of up to 32 nm are significantly less for the combustion in a compression ignition engine of ester fuel compositions in which at least 5 % by volume, which in this case is substantially all (that is, greater than 97 % by volume, which was the purity of the fatty acid mono-alkyl esters), of the fatty acid mono-alkyl esters are esters in which the fatty acid has less than 16 carbon atoms than those from the combustion in the compression ignition engine of the ester fuel compositions in which none of the fatty acid mono-alkyl esters are esters in which the fatty acid has less than 16 carbon atoms, that is in which substantially all (that is, greater than 97 % by volume, which was the purity of the fatty acid mono-alkyl esters) of the fatty acid monoalkyl esters are esters in which the fatty acids have at least 16 carbon atoms.

The results thus show the use of at least one cetane improver and at least one fatty acid mono-alkyl ester in which the fatty acid has less than 16 carbon atoms, to reduce the emissions of both particulate matter having a particle size of up to 32 nm and nitrogen oxides, on combustion of a fuel composition in a compression ignition engine.

The results also show a method of reducing the emissions of both particulate matter having a particle size of up to 32 nm and nitrogen oxides on combustion in a compression ignition engine of a fuel composition comprising at least one fatty acid mono-alkyl ester which method comprises providing sufficient of at least one cetane improver in the fuel composition to provide a pre-determined cetane value for the fuel composition and providing that at least 5 percent by volume of the fatty acid mono-alkyl esters in the fuel composition are mono-alkyl esters of fatty acids in which the fatty acids have less than 16 carbon atoms.

The results also show a fuel composition comprising at least one fatty acid mono- alkyl ester characterised in that the fuel composition comprises at least one cetane improver and in that at least 5 percent by volume of the fatty acid mono-alkyl esters in the fuel composition are mono-alkyl esters of fatty acids in which the fatty acids have less than 16 carbon atoms.

## Claims

1. A fuel composition comprising at least one fatty acid mono-alkyl ester
**characterised in that** the fuel composition comprises at least one cetane improver and **in that** at least 5 percent by volume of the fatty acid mono-alkyl esters in the fuel composition are mono-alkyl esters of fatty acids in which the fatty acids have less than 16 carbon atoms.

2. A fuel composition as claimed in claim 1 in which at least 20 percent, more preferably from 20 to 95 percent and yet more preferably from 40 to 90 percent by volume of the fatty acid mono-alkyl esters in the fuel composition are mono-alkyl esters of fatty acids in which the fatty acids have less than 16 carbon atoms.

3. A fuel composition as claimed in claim 1 or claim 2 having a cetane number of from 40 to 90, preferably of from 45 to 65.

4. A method of reducing the emissions of both particulate matter having a particle size of up to 32 nm and nitrogen oxides on combustion in a compression ignition engine of a fuel composition comprising at least one fatty acid mono-alkyl ester which method comprises providing sufficient of at least one cetane improver in the fuel composition to provide a pre-determined cetane value for the fuel composition and providing that at least 5 percent by volume of the fatty acid mono-alkyl esters in the fuel composition are mono- alkyl esters of fatty acids in which the fatty acids have less than 16 carbon atoms.

5. A method as claimed in claim 4 which comprises providing that at least 20 percent, more preferably from 20 to 95 percent and yet more preferably from 40 to 90 percent by volume of the fatty acid mono-alkyl esters in the fuel composition are mono-alkyl esters of fatty acids in which the fatty acids have less than 16 carbon atoms.

6. A method as claimed in claim 4 or claim 5 which comprises providing sufficient of at least one cetane improver in the fuel composition to provide a pre-determined cetane number for the fuel composition of from 40 to 90, preferably of from 45 to 65.

7. The use of at least one cetane improver and at least one fatty acid mono-alkyl ester in which the fatty acid has less than 16 carbon atoms, to reduce the emissions of both particulate matter having a particle size of up to 32 nm and nitrogen oxides, on combustion of a fuel composition in a compression ignition engine.

8. The use as claimed in claim 7 which comprises providing that at least 5 percent by volume, preferably at least 20 percent, more preferably from 20 to 95 percent and yet more preferably from 40 to 90 percent by volume of the fatty acid mono-alkyl esters in the fuel composition are mono-alkyl esters of fatty acids in which the fatty acids have less than 16 carbon atoms.

9. The use as claimed in claim 7 or claim 8 which comprises using at least one cetane improver which is a nitrate or peroxide.
